# EUROPÄISCHE PATENTSCHRIFT

(11) **EP 1 682 756 B1**
(45) Veröffentlichungstag und Bekanntmachung des Hinweises auf die Patenterteilung: **19.01.2011**
(21) Anmeldenummer: 04762766.6
(22) Anmeldetag: 07.09.2004
(51) Int. Cl.: F01N 3/20

(54) **VORRICHTUNG ZUM EINBRINGEN EINES REDUKTIONSMITTELS IN DAS ABGAS EINER BRENNKRAFTMASCHINE**
DEVICE FOR INTRODUCING A REDUCING AGENT INTO THE EXHAUST GAS OF AN INTERNAL COMBUSTION ENGINE
DISPOSITIF D'INTRODUCTION D'UN AGENT REDUCTEUR DANS LES GAZ D'ECHAPPEMENT D'UN MOTEUR A COMBUSTION INTERNE

(30) Priorität: 04.11.2003 DE 10351458
(43) Veröffentlichungstag der Anmeldung: 26.07.2006
(73) Patentinhaber: ROBERT BOSCH GMBH, 70442 Stuttgart (DE)
(72) Erfinder: OFFENHUBER, Michael, A-5421 Adnet (AT); LACKNER, Franz, A-5542 Flachau (AT); SILLER, Johann, A-5412 Puch bei Hallein (AT); OLIVIER, Marco, A-5023 Salzburg (AT); REITER, Rainer, 83435 Marzoll (DE)
(86) Internationale Anmeldenummer: PCT/DE2004/001984
(87) Internationale Veröffentlichungsnummer: WO 2005/045209

(56) Entgegenhaltungen:
- EP-A- 0 928 884
- WO-A-03/016687
- DE-A- 4 432 576
- DE-A- 10 047 512
- DE-A- 19 946 900
- US-A1- 2003 033 799

## Beschreibung

### Stand der Technik

Die Erfindung betrifft eine Vorrichtung zum Einbringen eines Reduktionsmittels, welches insbesondere Harnstoff enthält, in das Abgas einer Brennkraftmaschine, mit einem Vorratsbehälter, einer Fördereinrichtung, und einem Strömungsweg für das Reduktionsmittel, und mit einer Entlüftungseinrichtung zum Entlüften mindestens eines Bereichs des Strömungswegs.

Eine Vorrichtung zum Nachbehandeln von Abgasen einer Brennkraftmaschine ist aus der DE 101 16 214 A1 bekannt. Eine Harnstoff-Wasser-Lösung ist in einem Vorratsbehälter bevorratet und wird von einer Förderpumpe zu einer Mischkammer gefördert. In diese wird Druckluft eingeblasen. Das sich ergebende Aerosol aus Druckluft und Harnstoff-Wasser-Lösung wird in einen Abgasstrang vor einem Katalysator eingeblasen. Hier dient der Harnstoff zur Reduktion von NOx im Katalysator.

Die bisher bekannten Systeme arbeiten mit einer Membranpumpe zur Förderung der Harnstoff-Wasser-Lösung.

Deren Förderleistung ist jedoch reduziert, wenn auf der Saugseite und insbesondere in einem Pumpenkopf Luft im Strömungsweg vorhanden ist. Daher muss das System entlüftet werden. Dies geschieht bei der bekannten Vorrichtung über ein von einem Steuergerät anzusteuerndes Magnetventil. Im Betrieb dieses Magnetventils hat sich jedoch gezeigt, dass auch bei geöffnetem Magnetventil die Entlüftung des Strömungswegs für das Reduktionsmittel nicht immer gewährleistet werden kann.

WO 03/016687 A1 beschreibt ein Dosiersystem zur Dosierung eines Reduktionsmittels für eine Abgasnachbehandlung.

Die vorliegende Erfindung hat die Aufgabe, eine Vorrichtung der eingangs genannten Art so weiterzubilden, dass sie möglichst zuverlässig arbeitet.

Diese Aufgabe wird durch eine Vorrichtung mit den Merkmalen des Anspruchs 1 gelöst.

### Vorteile der Erfindung

Durch die Anordnung der Entlüftungseinrichtung an einer geodätisch hochgelegenen Stelle des Strömungswegs wird die Entlüftung an jener Stelle durchgeführt, an der sich die Luft sammelt. Hierdurch wird eine besonders wirkungsvolle Entlüftung erreicht. Dies führt letztlich zu einem hohen Wirkungsgrad der Fördereinrichtung, beispielsweise einer Membranpumpe. Vor allem kann durch eine deutliche Verringerung des im Strömungsweg vorhandenen Luftvolumens oder gar durch eine vollständige Eliminierung von Luft aus dem Strömungsweg die Zeit deutlich verkürzt werden, die vom Einschalten der Fördereinrichtung bis zur Abgabe des Reduktionsmittels vergeht.

Dadurch, dass die Entlüftungseinrichtung eine Öffnung aufweist, welche eine Rückführung von Fluid immer zulässt, wird ein Verstopfen der Entlüftungseinrichtung verhindert. Insbesondere in Wasser gelöster Harnstoff hat nämlich eine Tendenz, an Luft zu kristallisieren. Dadurch, dass die Entlüftungseinrichtung nie ganz geschlossen ist, werden eventuell an der Öffnung anhaftende Harnstoffkristalle von dem zurückströmenden Fluid mitgerissen und wieder gelöst. Die Öffnung wird durch den ständigen Fluidstrom somit "gereinigt" und freigehalten. Die Entlüftungsfunktion der Entlüftungseinrichtung wird durch diese erfindungsgemäße Maßnahme auch dann gewährleistet, wenn eine eigentliche Entlüftung für einen längeren Zeitraum nicht durchgeführt worden ist. Die Zuverlässigkeit im Betrieb der Vorrichtung wird hierdurch deutlich erhöht.

Gegenstand der Erfindung ist, dass die Entlüftungseinrichtung ein Schwimmerventil umfasst. Bei auftretenden Luftblasen oder angesaugter Luft gibt ein solches Schwimmerventil eine vergrößerte Öffnung frei und die Luft kann schnell entweichen. Anschließend bewirkt der Schwimmer, dass der Öffnungsquerschnitt wieder auf seine minimale Dimension, bei der ein kleiner ständiger Fluidstrom abströmt, verringert wird. Ein solches Schwimmerventil baut relativ einfach und verhindert unnötige Strömungsverluste dann, wenn der Fluidweg ausreichend entlüftet ist.

Vorteilhafte Weiterbildungen der Erfindung sind in Unteransprüchen angegeben.

Von Vorteil ist es, wenn die Entlüftungseinrichtung in einem Filter oder in der Nähe zu einem Filter angeordnet ist. Dem liegt folgender Gedanke zugrunde: Harnstoff-Wasser-Lösungen gefrieren bei Temperaturen unterhalb minus 11°C. Um die NOx-Reduktion im Katalysator auch bei derart tiefen Temperaturen bereit stellen zu können, muss die Vorrichtung beheizbar sein. Insbesondere nach einer längeren Standzeit bei tiefen Temperaturen (kleiner als -11°C) muss die Harnstoff-Wasser-Lösung zunächst aufgetaut werden, bevor die Dosierung des Reduktionsmittels gestartet werden kann. Lufteinschlüsse in der gefrorenen Harnstoff-Wasser-Lösung und insbesondere im Bereich eines Filters reduzieren jedoch den Wärmeübergang der Heizung in die Harnstoff-Wasser-Lösung und verlängern hierdurch die Zeit, welche zum Auftauen der gefrorenen Harnstoff-Wasser-Lösung benötigt wird. Durch die Anordnung der Entlüftungseinrichtung in einem Filter oder in der Nähe zu einem Filter werden derartige Lufteinschlüsse in der Harnstoff-Wasser-Lösung im Bereich des Filters zuverlässig vermieden, was das Auftauen der gefrorenen Harnstoff-Wasser-Lösung beschleunigt.

In Weiterbildung hierzu wird vorgeschlagen, dass der Filter in zwei um ungefähr 90° unterschiedlichen Einbaulagen betrieben werden kann, und dass die Entlüftungseinrichtung in einem Winkel von ungefähr 45° zwischen den beiden Einbaulagen angeordnet ist. Auf diese Weise ist es möglich, die Vorrichtung beispielsweise in Kraftfahrzeugen je nach Einbauanforderung in den zwei Haupteinbaulagen einbauen zu können, ohne dass die Integration der Entlüftungseinrichtung geändert werden muss.

Vorteilhaft ist ferner, wenn die Entlüftungseinrichtung stromaufwärts von der Fördereinrichtung angeordnet ist. In diesem Fall wird sichergestellt, dass auf der Saugseite der Fördereinrichtung keine Luft im Strömungsweg vorhanden ist, so dass bei einem Einschalten der Fördereinrichtung die Förderleistung sofort zur Verfügung steht.

### Zeichnung

Nachfolgend wird die vorliegende Erfindung unter Bezugnahme auf die beiliegende Zeichnung näher erläutert. In der Zeichnung zeigen:
- Figur 1: eine schematische Darstellung der erfindungsgemäßen Vorrichtung zum Einbringen eines Reduktionsmittels in das Abgas einer Brennkraftmaschine;
- Figur 2: einen Teilschnitt durch die erfindungsgemäßen Entlüftungseinrichtung der Vorrichtung von Figur 1; und
- Figur 3: eine Darstellung ähnlich Figur 1 eines weiteren Systems, nicht Gegenstand der Erfindung

### Beschreibung der Ausführungsbeispiele

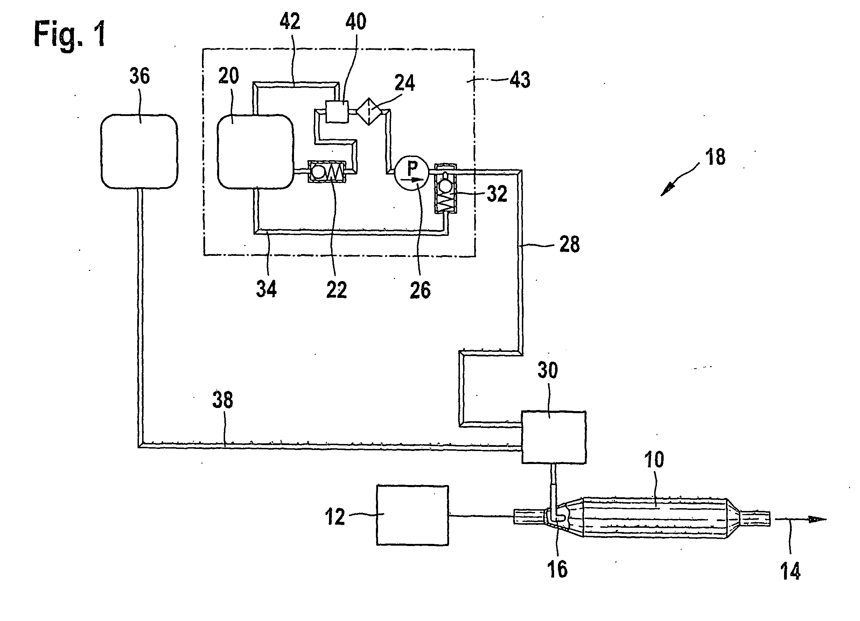

In Figur 1 ist ein Katalysator einer Abgasanlage einer Brennkraftmaschine insgesamt mit 10 bezeichnet. Das Abgas wird dem Katalysator 10 von in der Zeichnung nur schematisch dargestellten Brennräumen 12 der Brennkraftmaschine zugeführt. Es durchströmt den Katalysator 10 und verlässt ihn in Richtung des Pfeiles 14. Der Katalysator 10 dient in Verbindung mit den Verdampfungsbestandteilen eines harnstoffhaltigen Betriebsstoffs zur Verminderung von NOₓ-Bestandteilen im Abgas. Hierzu wird über eine Düse 16 ein Aerosol in den Abgasstrom eingespritzt. Dieses Aerosol enthält Harnstoff als Reduktionsmittel zur NOₓ-Konvertierung. Zur Herstellung des Aerosols dient eine Vorrichtung, welche in Figur 1 insgesamt das Bezugszeichen 18 trägt:

Die Vorrichtung 18 umfasst einen Vorratsbehälter 20, in dem eine Harnstoff-Wasser-Lösung bevorratet ist. Aus diesem wird das Harnstoff-Wasser-Gemisch über ein Rückschlagventil 22 und einen Filter 24 von einer Fördereinrichtung 26, die als Membranpumpe ausgebildet ist, mittels einer Leitung 28 zu einer Mischkammer 30 gefördert (auf das Rückschlagventil 22 kann bei Einsatz bestimmter Membranpumpen auch verzichtet werden). Der Druck in der Leitung 28 wird durch ein Druckbegrenzungsventil 32 eingestellt. Dessen Auslass ist vorliegend über eine Rücklaufleitung 34 mit dem Behälter 20 verbunden (alternativ wäre auch eine Verbindung mit der Saugseite der Fördereinrichtung 26 möglich). Eine Druckluftversorgung 36 führt der Mischkammer 30 über eine Druckluftleitung 38 Druckluft zu. Von der Mischkammer 30 gelangt das Wasser-Harnstoff-Luftgemisch zur Düse 16, wo es vernebelt und so das Aerosol erzeugt wird.

Die Leitung 28 der Vorrichtung 18 ist so geführt, dass der Filter 24 an der geodätisch höchsten Stelle der Vorrichtung 18 angeordnet ist. An dieser geodätisch höchsten stelle ist unmittelbar stromaufwärts vom Filter 24 in der Leitung 28 eine Entlüftungseinrichtung 40 angeordnet. Eine Entlüftungsleitung 42 führt von der Entlüftungseinrichtung 40 zum Behälter 20 zurück. Die gesamte aus Vorratsbehälter 20, Ventilen 22 und 32, Filter 24 und Pumpe 26 bestehende Gruppe kann beheizt werden. Die entsprechende Heizeinrichtung ist in Figur 1 durch eine strichpunktierte Linie angedeutet und trägt das Bezugszeichen 43.

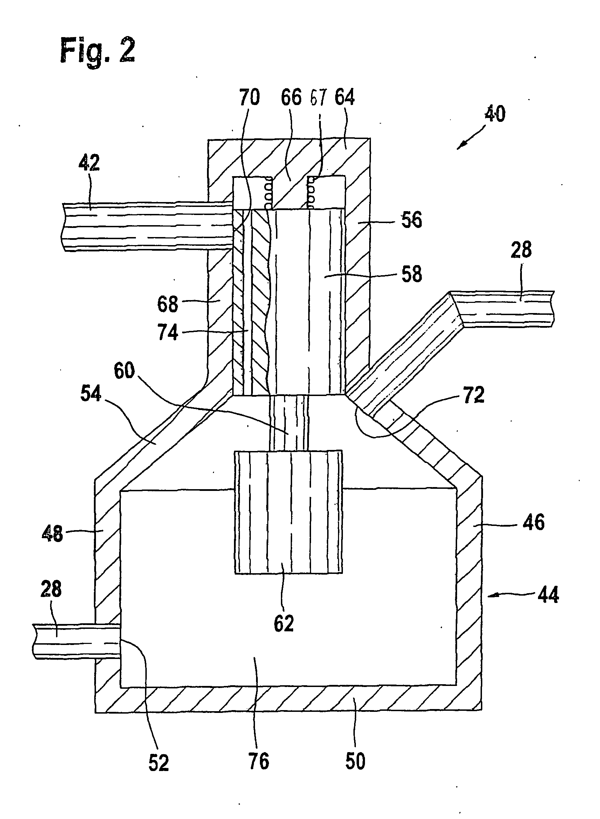

Bei der Entlüftungseinrichtung 40 handelt es sich gemäß der Erfindung um ein Schwimmerventil. Dessen grundsätzlicher Aufbau ist in Figur 2 dargestellt:

Das Schwimmerventil 40 umfasst ein Gehäuse 44 mit einem kreiszylindrischen topfförmigen Basisabschnitt 46. In einer Umfangswand 48 des Basisabschnitts 46 ist im Bereich eines Bodens 50 des Basisabschnitts 46 eine Öffnung 52 vorhanden. In diese mündet die Leitung 28 vom Behälter 20 bzw. vom Rückschlagventil 22 her kommend. Oberhalb des Basisabschnitts 46 ist ein sich trichterförmig verjüngender Übergangsabschnitt 54 vorhanden, an den ein zylindrischer Ventilabschnitt 56 angeformt ist. In diesem ist ein zylindrischer Ventilkörper 58 gleitend und fluiddicht geführt. Über eine Verbindungsstange 60 ist am Ventilkörper 58 zum Basisabschnitt 46 des Gehäuses 44 hin ein Schwimmer 62 befestigt.

Der Ventilabschnitt 56 des Gehäuses 44 ist nach oben hin durch einen Deckel 64 geschlossen. In der Mitte des Deckels 64 erstreckt sich zum Ventilkörper 58 hin ein zapfenartiger Abstandshalter 66. Um diesen ist zwischen Deckel 64 und Ventilkörper 58 eine Druckfeder 67 verspannt. In einer Umfangswand 68 des Ventilabschnitts 56 des Gehäuses 44 ist eine Entlüftungsöffnung 70 vorhanden, die mit der Entlüftungsleitung 42 verbunden ist.

Im Übergangsabschnitt 54 ist, diametral zur Einlassöffnung 52 gegenüberliegend, und unmittelbar bevor dieser in den Ventilabschnitt 56 übergeht, eine Auslassöffnung 72 vorhanden, an die die Leitung 28 angeschlossen ist, die zum Filter 24 weiterführt. Der Abstandshalter 66 ist so lang, dass der Ventilkörper 58 dann, wenn er am Abstandshalter 66 in Anlage ist, die Entlüftungsöffnung 70 gerade nicht vollständig verdeckt. Im Ventilkörper 58 ist in seiner Längsrichtung ein durchgehender Kanal 74 vorhanden. Der vom Gehäuse 46 umschlossene Raum wird als Entlüftungskammer 76 bezeichnet.

Das Schwimmerventil 40 arbeitet folgendermaßen:

Wenn in dem stromaufwärts vom Schwimmerventil 40 gelegenen Abschnitt der Leitung 28 Luft vorhanden ist, sammelt sich diese am geodätisch höchsten Punkt der Vorrichtung 18, nämlich in der Entlüftungskammer 76 des Schwimmerventils 40. Wenn jedoch die Entlüftungskammer 76 mit Luft gefüllt ist, erfährt der Schwimmer 62 keinen Auftrieb, so dass der Ventilkörper 58 von der Druckfeder 67 in der Figur 2 nach unten gedrückt wird und er die Entlüftungsöffnung 70 vollständig freigibt. Die Luft kann daher aus der Entlüftungskammer 76 durch den Kanal 74 und den vollen Querschnitt der Entlüftungsöffnung 70 zur Entlüftungsleitung 42 und weiter in den Vorratsbehälter 20 entweichen.

Im Verlauf der Entlüftung füllt sich die Entlüftungskammer 76 mit dem Harnstoff-Wasser-Gemisch. Hierdurch erfährt der Schwimmer 62 einen Auftrieb und drückt den Ventilkörper 58 gegen die Kraft der Druckfeder 67 nach oben, bis dieser am Abstandshalter 66 in Anlage kommt. Hierdurch wird der Querschnitt der Entlüftungsöffnung 70 verringert und schließlich fast vollständig verschlossen. Das Harnstoff-Wasser-Gemisch entweicht nun aus der Entlüftungskammer 76 durch die einen vergleichsweise großen Durchmesser aufweisende Auslassöffnung 72 in den stromabwärts vom Schwimmerventil 40 gelegenen Abschnitt der Leitung 28 zum Filter 24 hin.

Gleichzeitig gelangt ein geringer Strom an Harnstoff-Wasser-Gemisch über den Kanal 74 und den vom Ventilkörper 58 nicht vollständig abgedeckten Bereich der Entlüftungsöffnung 70 weiterhin über die Entlüftungsleitung 42 zum Vorratsbehälter 20 zurück. Hierdurch wird Harnstoff, der im Bereich der Entlüftungsöffnung 70 auskristallisiert ist, mitgerissen, gelöst und in den Behälter 20 zurückgespült.

Das Schwimmerventil 40 ist so ausgebildet, dass es nicht nur in der in Figur 2 gezeigten vertikalen Lage arbeiten werden kann, sondern auch in einer um +/- 45° hiervon abweichenden Lage. Somit kann die Vorrichtung 18 insgesamt in einem Lagebereich von 0 bis 90° eingebaut werden, ohne dass Änderungen an der Anordnung des Schwimmerventils 40 erforderlich sind.

Nicht Gegenstand der Erfindung, ist die Entlüftungseinrichtung 40 als Magnetventil ausgeführt, welches von einem Steuergerät geöffnet oder geschlossen wird. Das Magnetventil ist so ausgebildet, dass auch in seiner "geschlossenen" Stellung eine geringe Menge an Harnstoff-Wasser-Gemisch über die Entlüftungsleitung zum Vorratsbehälter zurückströmen kann, so dass im Bereich des Magnetventils auskristallisierter Harnstoff mitgerissen, gelöst und zum Behälter zurückgespült wird.

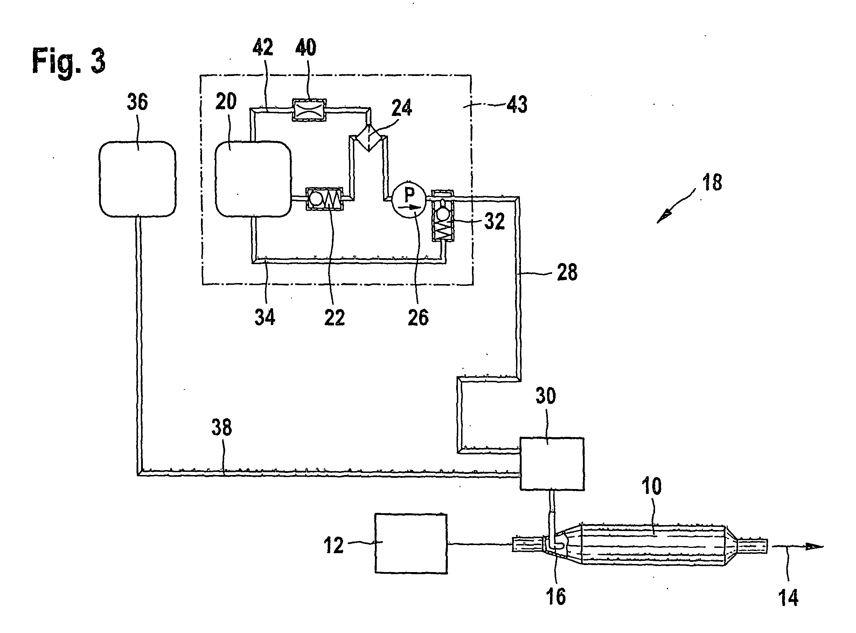

Ein weitere System, nicht Gegenstand der Erfindung, ist in Figur 3 dargestellt. Dabei tragen solche Elemente und Bereiche, die äquivalente Funktionen zu Elementen und Bereichen des in Figur 1 gezeigten Ausführungsbeispiels aufweisen, die gleichen Bezugszeichen. Sie sind nicht nochmals im Detail erläutert.

Bei dem in Figur 3 gezeigten System besteht die Entlüftungseinrichtung 40 aus einer Strömungdrossel, die in der Entlüftungsleitung 42 angeordnet ist. Die Entlüftungsleitung 42 zweigt unmittelbar vom Filter 24 an der geodätisch höchsten Stelle der Vorrichtung 18 ab. Durch die Entlüftungsleitung 42 mit der Strömungsdrossel 40 wird im Betrieb der Vorrichtung 18 ständig Luft und/oder Harnstoff-Wasser-Gemisch aus der Leitung 28 zum Vorratsbehälter 20 zurückgeführt. Die Strömungsdrossel 40 ist so bemessen, dass der Druck in der Leitung 28, der zur Erzeugung des Aerosols in der Mischkammer 30 erforderlich ist, in jedem Falle aufrechterhalten werden kann.

## Patentansprüche

1. Vorrichtung (18) zum Einbringen eines Reduktionsmittels, welches insbesondere Harnstoff enthält, in das Abgas einer Brennkraftmaschine, mit einem Vorratsbehälter (20), einer Fördereinrichtung (26), und einem Strömungsweg (28) für das Reduktionsmittel, und mit einer Entlüftungseinrichtung (40) zum Entlüften mindestens eines Bereichs des Strömungswegs (28), wobei die Entlüftungseinrichtung (40) an einer geodätisch hochgelegenen Stelle des Strömungswegs (28) angeordnet ist, und wobei die Entlüftungseinrichtung (40) eine Entlüftungsöffnung (70) aufweist, welche eine Rückführung einer minimalen Fluidmenge zum Vorratsbehälter (20) hin immer zulässt, **dadurch gekennzeichnet, dass** die Entlüftungseinrichtung ein Schwimmerventil (40) umfasst.

2. Vorrichtung (18) nach Anspruch 1, **dadurch gekennzeichnet, dass** die Entlüftungseinrichtung (40) in einem Filter (24) oder in der Nähe zu einem Filter (40) angeordnet ist.

3. Vorrichtung (18) nach Anspruch 2, **dadurch gekennzeichnet, dass** der Filter (24) in zwei um ungefähr 90° unterschiedlichen Einbaulagen betrieben werden kann, und dass die Entlüftungseinrichtung (40) in einem Winkel von ungefähr 45° zwischen den beiden Einbaulagen angeordnet ist.

4. Vorrichtung (18) nach einem der vorhergehenden Ansprüche, **dadurch gekennzeichnet, dass** die Entlüftungseinrichtung (40) stromaufwärts von der Fördereinrichtung (26) angeordnet ist.

## Claims

1. Device (18) for introducing a reducing agent, which comprises in particular urea, into the exhaust gas of an internal combustion engine, having a storage tank (20), a delivery device (26) and a flow path (28) for the reducing agent, and having a ventilation device (40) for ventilating at least one region of the flow path (28), with the ventilation device (40) being arranged at a geodetically elevated point of the flow path (28), and with the ventilation device (40) having a ventilation opening (70) which always permits a return flow of a minimal fluid quantity to the storage tank (20), **characterized in that** the ventilation device comprises a float valve (40).

2. Device (18) according to Claim 1, **characterized in that** the ventilation device (40) is arranged in a filter (24) or in the vicinity of a filter (40).

3. Device (18) according to Claim 2, **characterized in that** the filter (24) can be operated in two installation positions which differ by approximately 90°, and **in that** the ventilation device (40) is arranged at an angle of approximately 45° between the two installation positions.

4. Device (18) according to one of the preceding claims, **characterized in that** the ventilation device (40) is arranged upstream of the delivery device (26).

## Revendications

1. Dispositif (18) pour apporter un agent réducteur qui contient en particulier de l'urée dans les gaz d'échappement d'un moteur à combustion interne, et présentant un récipient de réserve (20), un dispositif de transport (26) et un parcours d'écoulement (28) pour l'agent réducteur ainsi qu'un dispositif (40) d'évacuation d'air qui évacue l'air d'au moins une partie du parcours d'écoulement (28),
le dispositif (40) d'évacuation d'air étant disposé en un emplacement géodésiquement plus élevé du parcours d'écoulement (28),
le dispositif (40) d'évacuation d'air présentant une ouverture (70) d'évacuation d'air qui permet toujours le renvoi d'un débit minimum de fluide vers le récipient de réserve (20),
**caractérisé en ce que**
le dispositif d'évacuation d'air comprend une soupape (40) à flotteur.

2. Dispositif (18) selon la revendication 1, **caractérisé en ce que** le dispositif (40) d'évacuation d'air est disposé dans un filtre (24) ou à proximité d'un filtre (40).

3. Dispositif (18) selon la revendication 2, **caractérisé en ce que** le filtre (24) peut être utilisé en deux positions de montage qui diffèrent d'environ 90° et **en ce que** le dispositif (40) d'évacuation d'air est disposé à un angle d'environ 45° entre les deux positions de montage.

4. Dispositif (18) selon l'une des revendications précédentes, **caractérisé en ce que** le dispositif (40) d'évacuation d'air est disposé en amont du dispositif de transport (26).
